Europäisches Patentamt

(19) European Patent Office

Office européen des brevets

(11) EP 0 305 787 B2

(12) NEW EUROPEAN PATENT SPECIFICATION

(45) Date of publication and mention
of the opposition decision:
**03.09.1997 Bulletin 1997/36**

(45) Mention of the grant of the patent:
**07.10.1992 Bulletin 1992/41**

(21) Application number: **88113098.3**

(22) Date of filing: **12.08.1988**

(51) Int. Cl.$^6$: **B01D 69/00**

(54) **A process for manufacturing permselective asymmetric membranes suitable for haemodialysis and the so prepared membranes**

Verfahren zur Herstellung einer permselektiven, asymmetrischen Membrane, verwendbar in der Hämodialyse und die so hergestellten Membrane

Un procédé de fabrication de membranes permsélectives asymmétriques utiles pour l'hémodialyse et les membranes fabriquées selon ce procédé

(84) Designated Contracting States:
**BE CH DE ES FR GB IT LI NL**

(30) Priority: **31.08.1987 SE 8703367**

(43) Date of publication of application:
**08.03.1989 Bulletin 1989/10**

(73) Proprietor:
**GAMBRO DIALYSATOREN GMBH & CO. KG
D-72379 Hechingen (DE)**

(72) Inventors:
• **Buck, Reinhold Johannes
D-7952 Alleshausen (DE)**
• **Göhl, Hermann Joseph
D-7457 Bisingen-Zimmern (DE)**

(74) Representative: **Weber, Dieter, Dr.
Weber, Dieter, Dr.,
Seiffert, Klaus, Dipl.-Phys.,
Lieke, Winfried, Dr.
Postfach 61 45
65051 Wiesbaden (DE)**

(56) References cited:

| | |
|---|---|
| EP-A- 0 082 433 | EP-A- 0 168 783 |
| WO-A-86/00028 | DE-A- 3 342 824 |
| DE-A- 3 407 252 | US-A- 4 051 300 |

• **PATENT ABSTRACTS OF JAPAN, vol. 10, no. 120 (C-343)(2177), 16th May 1986**
• **PATENT ABSTRACTS OF JAPAN, vol. 11, no. 115 (C-415)(2562), 10th April 1987**

Remarks:
The file contains technical information submitted after the application was filed and not included in this specification

## Description

### Technical Field

The present invention relates to a permselective asymmetric hollow fiber membrane suitable for, for example, hemodialysis, comprised of a hydrophobic first polymer, a hydrophilic second polymer and suitable additives being chosen from the group of non-solvents or weak solvents for the hydrophobic polymer, and to a process for manufacturing such a membrane.

Membranes of the above kind present special advantages when they are used in connection with different kinds of medical treatments, such as hemodialysis, hemofiltration, plasmapheresis and immunotherapy. They may, however, also be used in connection with dialysis and filtration in general, for example in connection with cleaning or depyrogenization of water.

### Technical Standpoint

Membranes of the above kind are described in detail in, for instance, EP-A-0 168 783, EP-B-0 082 433 and WO 86/00028.

As regards the prior art reference is also being made to US-A-4 051 300 and Patents Abstract of Japan, vol. 11, no. 115 (C-415) (2562), 10th April 1987; JP-A-61 257 203.

### Description of the Invention

The objective of the present invention is to improve hollow fiber membranes of the above mentioned kind.

This objective is solved according to the invention by a special integral three-layer structure, comprising a first inner layer in the form of a dense rather thin skin, having a thickness less than 1 $\mu$m and a maximum pore size of about 8 nm, responsible for the sieving properties, a second layer in the form of a sponge structure, having a high diffusive permeability and a thickness of about 1 to 15 $\mu$m and serving as a support for said first layer, and a third layer in the form of a finger structure, giving the membrane a mechanical stability and having a thickness of about 20 to 60 $\mu$m, the membrane being manufactured by presolving the hydrophobic first polymer in a solvent, presolving the hydrophilic second polymer in a solvent of preferably the same kind, mixing the two solutions, extruding the mixture through the outer ring slit of a nozzle with two concentric openings, a precipitating liquid including a part of the hydrophilic second polymer flowing through the inner openings, to obtain a coagulated membrane, which is subsequently washed and peferably dried.

The additives are chosen from the group of non-solvents or weak solvents for the hydrophobic polymer, such as alcohols, glycerols and water. The advantages obtained by such a structure will be explained more in detail in the following.

As regards possible compositions, properties and other characteristics of the membrane reference is made to the following claims.

The invention relates also to a preferred process for manufacturing a hollow fiber membrane by presolving the hydrophobic first polymer in a solvent, presolving polyvinylpyrrolidone, polyglycol-monoester, water soluble cellulosic derivative, polysorbate, or polyethylene-polypropylene oxide copolymer, preferably polyvinylpyrrolidone as the hydrophilic second polymer in a solvent of preferably the same kind and mixing the two solutions, whereafter the mixture is extruded through the outer ring slit of a nozzle with two concentric openings a precipitating liquid including a part of the hydrophilic second polymer flowing through the inner opening to obtain a coagulated membrane, which is subsequently washed and preferably dried.

As regards how said process may be carried through more in detail, reference is made to the following claims.

Due to the fact that the present invention in the first place is intended to be used to improve a membrane essentially of the kind described and claimed in the above mentioned EP-B-0 082 433 it will in the following be described more in detail in connection with such a membrane and how it may be manufactured.

### BRIEF DESCRIPTION OF DRAWINGS

Fig 1a and 1b show scanning electromicroscopic pictures of the membrane structure.

Fig 2a and 2b show more in detail the skin and the porous layer.

Fig 3 shows the sieving coefficients for two different membranes in vivo and in vitro, respectively, one membrane being made in accordance with the invention and the other outside the protection scope for comparison.

Fig 4 present the results of protein adsorption measurements on the same two membranes.

Fig 5 shows the increase of the complement factor $C_{3a}$ during the first period of a dialysis treatment for four different membranes (any such increase has not been observed for a membrane according to the present invention.

Fig 6 shows the change of the number of leucocytes in a patients blood by hemodialysis by the use of a membrane according to the present invention.

Fig 7 shows the ultrafiltration rate of a membrane according to the present invention at different trans membrane pressures and different blood flows.

Fig 8, finally, shows the urea clearance for a membrane according to the present invention at different blood flows.

## BEST MODE OF CARRYING OUT THE INVENTION

The manufacturing of the membrane according to the present invention follows a phase inversion process, where a polymer or a mixture of polymers is solved in a solvent. The solution is then extruded through a spinning nozzle (for hollow fibers) or a slit nozzle (for flat film) into a fluid bath containing a nonsolvent for the polymer. The nonsolvent replaces the solvent and thus the polymer is precipitated to an inverted solid phase.

For the membrane of the present invention the hydrophobic polymer, the hydrophilic polymer and an additive are mixed in the following way:

a) the hydrophobic polymer, preferably polyamide, is presolved in a solvent, preferably DMSO (dimethylsulfoxid).
b) the hydrophilic polymer, preferably PVP (polyvinylpyrrolidone), is separately premixed in a solvent, preferably DMSO.

a) and b) are thereafter mixed together at an elevated temperature, preferably 60°C, and high shear forces or with ultrasonic equipment. Then the solution must be cooled, preferably below 21°C.

If this process is not followed the PVP will form aggregates. During the membrane forming process this PVP-aggregates will precipitate and be washed out leaving microholes in the membrane.

Before the extrusion any possible additives are mixed into the mixture of a) and b). The additives are used to form a proper pore structure and optimize therewith the membrane permeability, the hydraulic and diffusive permeability and the sieving properties. The additives nay be said to work as pore controller. Substances which may be used are nonsolvents or weak solvents for the hydrophobic polymer, preferably alcohols, glyceroles and water.

To provide a hollow fiber according to the present invention the above mixture is extruded through a nozzle with two concentric openings. Through the outer ring slit the polymer solution is extruded, through the inner core opening the centre fluid, a nonsolvent of the hydrophobic polymer, is extruded. The fiber is then immersed in baths of nonsolvents or fluids which can replace and wash out the solvent. As solvent there are preferably used polar solvents like DMF, DMSO or DMAc.

To achieve an optimal structure in a membrane according to the invention (3 integral layers) the center fluid (for a hollow fiber), respectively, the first precipitation fluid bath (for a flat film) should be a mixture of the hydrophilic polymer, an additive and a solvent, i e mixed with the nonsolvent. It has been found that with this constellation (center fluid and the described polymer solution) the typical integral 3-layer structure is formed. Depending on the ratio of the components the 3 layers get different thicknesses.

## EXAMPLE 1

In accordance with the above defined manufacturing technique 13 w% polyamid was dissolved into a solution containing 3 w% PVP (MW 100 000), 3 w% water and 81 w% DMSO. The polymer solution was degassed and filtered, and then pumped through a concentric hollow fiber spinning jet. The polymer was extruded through the outer ring slit with an outer diameter of about 0.35 mm and an inner diameter of about 0.25 mm. From the inner orifice of the jet a solution of 30 w% DMSO, 3 w% PVP and 67 w% water was extruded.

A hollow fiber was thus formed with 215 μm inner diameter and 50 μm wall thickness. The fiber was then washed thoroughly with non-pyrogenic water, then treated with a mixture of 40 w% glycerol and 60 w% water, and finally dried with air.

The membrane formed got a structure of 3 layers: the inner dense skin with a thickness of about 1 μm. the sponge-like substructure with a thickness of about 5 μm and the open finger-like structure with a thickness of about 45 μm.

## EXAMPLE 2

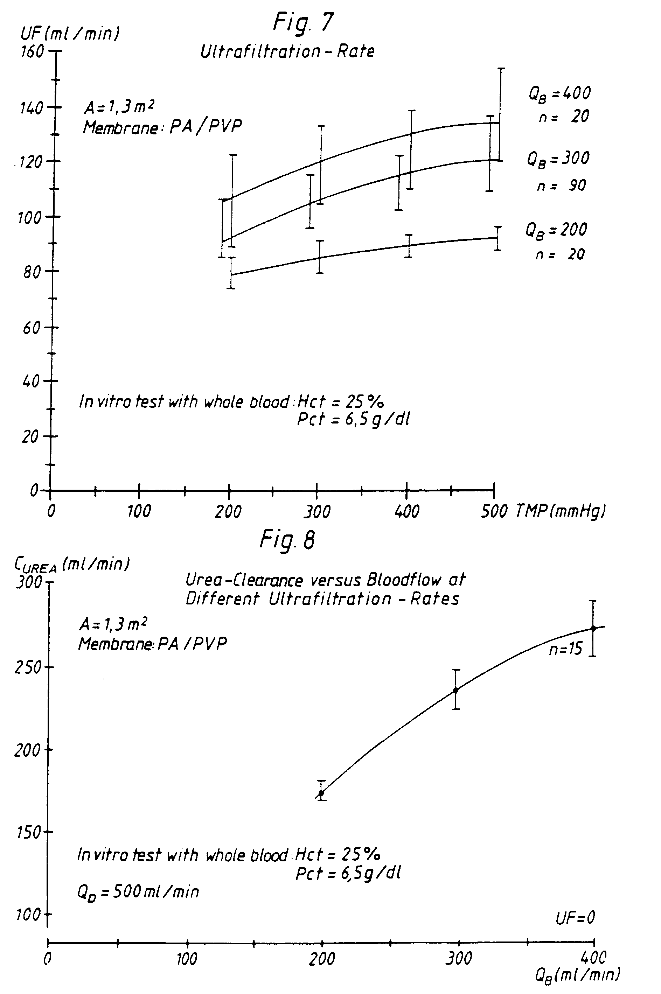

Membranes (hollow fibers) manufactured as described in example 1 were assembled in a dialyzer with 1,3 m$^2$ surface area. The ultrafiltration with water was measured to be 500 x 10$^{-12}$ m$^3$/m$^2$.s.Pa (250 ml/mm.Hg.m$^2$.h). With whole blood the ultrafiltration was dependant on flow parameters and blood composition (hematocrite Hct, protein concentration Pct, blood flow and transmembrane pressure), and is influenced by protein concentration polarization. At a blood flow of 300 ml/min a maximum ultrafiltration of 120 ml min was achieved with blood of 25 % Hct and 65 g/l total protein (see fig 7).

The diffusive permeability is estimated by the clearance. Clearances for urea, measured in blood for a dialyzer according to example 3 with blood flows of 200, 300 and 400 ml/min are shown in fig 8. The ultrafiltration at this occasion was prohibited to 0. The total protein in the filtrate was less than 0,05 g/l filtrate.

The $\beta_2$-M permeability was measured in clinical use for the same dialyzer by measuring the concentration of $\beta_2$-M in the venous ($C_v$) and arterial ($C_a$) blood stream and in the filtrate ($C_F$). The calculated sieving coefficient

$$S = \frac{2c_F}{C_v + C_a}$$

was 0,65. Rejection of endotoxins released (from E-coli) was measured with suspensions loaded (challenge) with 1,25 ng/ml E-coli endotoxins. The LRV was 4,0 (definition see below).

EXAMPLE 3

A solution of 13 w% PA, 3 w% PVP, 3 w% $H_2O$ and 81 w% DMSO was spun with a centre fluid of 90 w% $H_2O$, 1 w% PVP and 9 w% DMSO to a hollow fiber of dimensions mentioned in example 1. The hollow fiber got the 3 layer integral structure typical for the present invention. The sieving coefficient - measured with plasma containing 65 g/l total protein concentration - for $\beta_2$-M was measured to be 0.8. In spite of this high sieving coefficient for $\beta_2$-M the sieving coefficient for the total protein was below 0.001.

EXAMPLE 4

A solution of 11 w% PA, 1 w% PVP, 3 w% $H_2O$ and 85 w% DMSO was spun with a centre fluid of 98 w% $H_2O$ and 2 w% PVP to a hollow fiber of the dimensions mentioned in example 1. The sieving coefficient for $\beta_2$-M was measured in plasma to be 0.62 and for total protein below 0.001.

STRUCTURE

The membrane with an asymmetric structure is characterized by 3 integral layers with different functions and structure:

a) a smooth and dense homogenous thin (<1 $\mu$) layer, which determines the sieving properties.
b) a porous (sponge like) layer (about 1-15 $\mu$) which determines the mechanical stability of the inner layer (a) and acts as safety barrier in case the layer (a) has a defect.
c) an open finger like supporting layer, which gives the membrane its mechanical stability for transmembrane pressures and stresses during manufacturing (handling).

This membrane structure shows outstanding properties for the different blood purification methods, such as hemodialysis, hemodiafiltration and hemofiltration, because it has a high diffusive permeability for low molecular weight substances, a high permeability for middle molecular weight substances (MW 1000-15000) like $\beta_2$-microglobulin (MW 11 500), an ultrafiltration rate adaptable to hemodialysis, hemodiafiltration and hemofiltration, and an outstanding biocompatibility.

The inner layer or blood side has pores which are typically in the range 80 Å. The skin layer determines the sieving and permeability properties. The second layer has a sponge-like structure with a thickness of preferably about 5 $\mu$m. This layer supports the primary skin layer mechanically and gives the skin a continuous reinforcement and an improved resistance to burst and leakages (pin holes). The third layer shows an open finger-like structure with a thickness of about 20-60 $\mu$m, preferably 40 $\mu$m. The void volume in this part is high and gives low resistance for convective (filtration) and diffusive transport.

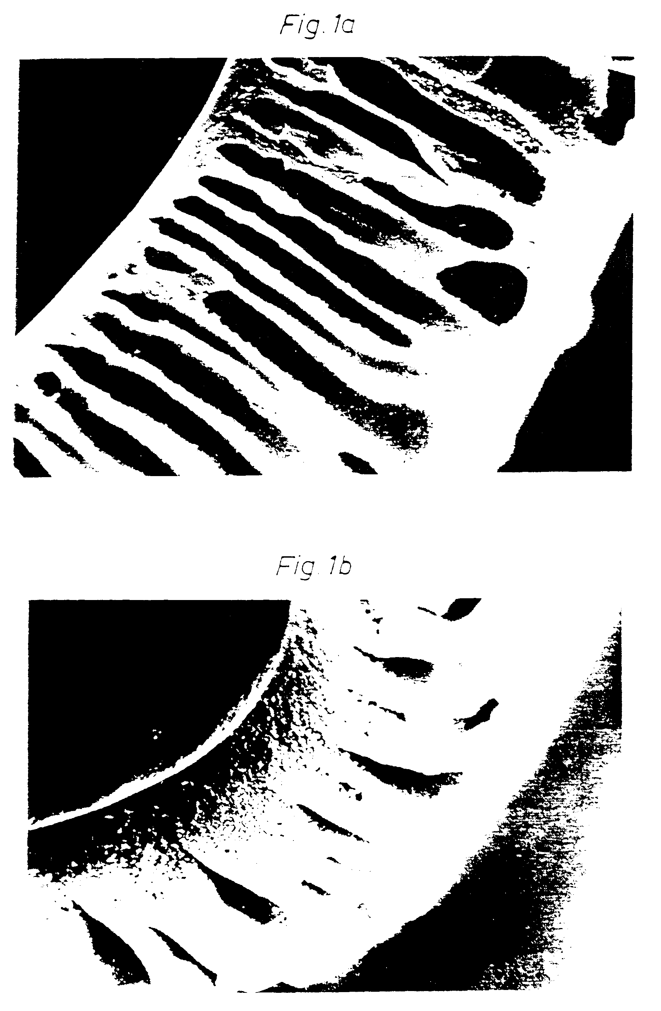

Scanning electromicroscopic (SEM) pictures in fig 1a and 1b show the whole membrane structure.

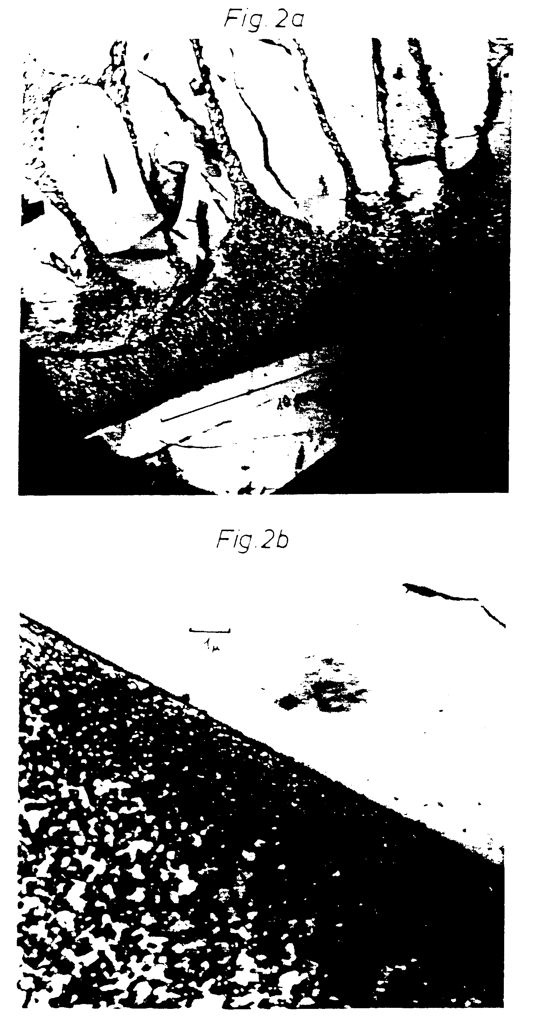

Fig 2a and 2b show more in detail the skin and the porous layer. To get this pictures the membrane had to be prepared in a special way:

a) the frozen membrane was cut in microtom slides
b) the membrane slide was etched and coated with C/Pt (carbon or platinum)
c) the replica was then magnified with SEM.

In the above mentioned publication EP-A-0 168 783, a membrane is described for similar applications as the membrane according to the present invention, but with a sponge-like structure through the whole thickness. The inner side of a membrane according to said publications show under the microscope a pore size of about 150 Å. The pores are then increasing from the inner to the outer side. The disadvantage of such a membrane is that proteins can penetrate into the structure of the membrane and thus change the membrane permeability.

DIFFUSIVE PERMEABILITY

The membrane of the present invention has a high diffusive permeability for substances which are to be removed in hemodialysis. Urea is one of the substances which is used as one of the characterizing test substances. The diffusive permeability Pm, measured (according the method described in NIH Report 77-1294 Evaluation of hemodialyzers and dialysis membranes) in a test cell is much higher than corresponding values measured for a membrane in accordance with the above mentioned publication EP-B-0 082 433. The Pm-values of the membrane according to the present invention are between 110 and 150 x $10^{-5}$ cm/sec, whereas the above publication report Pm-values of 75 x $10^{-5}$ cm/sec (45 x $10^{-3}$ cm/min).

The diffusive permeability Pm of a membrane determines the clearance of a hemodialyzer. The mathematical description of this relationship is :

$$\text{Clearance} = Q_B \cdot [1-e^{Pm \cdot A/Q_B}]$$

The high Pm-values of the membrane according to the present invention correspond to clearance values for a 1 $m^2$-dialyser of 175-185 ml/min at the standard conditions of 200 ml/min blood flow and 500 ml/min dialysate flow and TMP of 0 bar (0 mmHg) measured with whole blood. The high diffusive permeability of the membrane is achieved by the low diffusive resistance of the membrane which is caused by the high degree of hydrophilicity of the membrane and the described open structure.

ULTRAFILTRATION

Hemodialysis, hemodiafiltration and hemofiltration membranes are characterized also by their ultrafiltration permeability (other expressions are hydraulic or mechanical permeability, or convective permeability). For hemofiltration and hemodiafiltration a high ultrafiltration rate is desired. The membrane according to the present invention shows much higher ultrafiltration rate for water (about 500 x $10^{-12}$ $m^3/m^2$.s.Pa) [250 ml/h mmHg.$m^2$], measured at 37° C) than most other membranes. The membrane according to EP-A-0 082 433, for example, is reported to show a lower ultrafiltration rate (200 x $10^{-3}$ $\ell/m^2$.d.bar, corresponding to 110 ml/h.mmHg.$m^2$)

SIEVING PROPERTIES

Membranes for hemodialysis and hemofiltration on one hand need the described high permeability and on the other hand must reject proteins with high molecular weight. For albumin (MW 68 000) the rejection should be infinite The patient would otherwise loose essential proteins.

Recent clinical investigations give, however, indications that a protein with low molecular weight ($\beta_2$-M, MW 11 500) should be removed during dialysis treatments because it causes amyloidosis.

With the membrane of the present invention the combination of these two requirements can be fulfilled. i e it is possible to provide a high sieving coefficient (S) of about 0,6-0,8 for $\beta_2$-microglobulin, and a low sieving coefficient for albumin of about 0,001. The mentioned sieving properties are measured in clinical treatment on human blood.

$$\text{Definition of } S = \frac{\text{concentration in filtrate of a substance}}{\text{mean value of blood inlet and outlet}} = \frac{C_{UF}}{\dfrac{C_i + C_a}{2}}$$

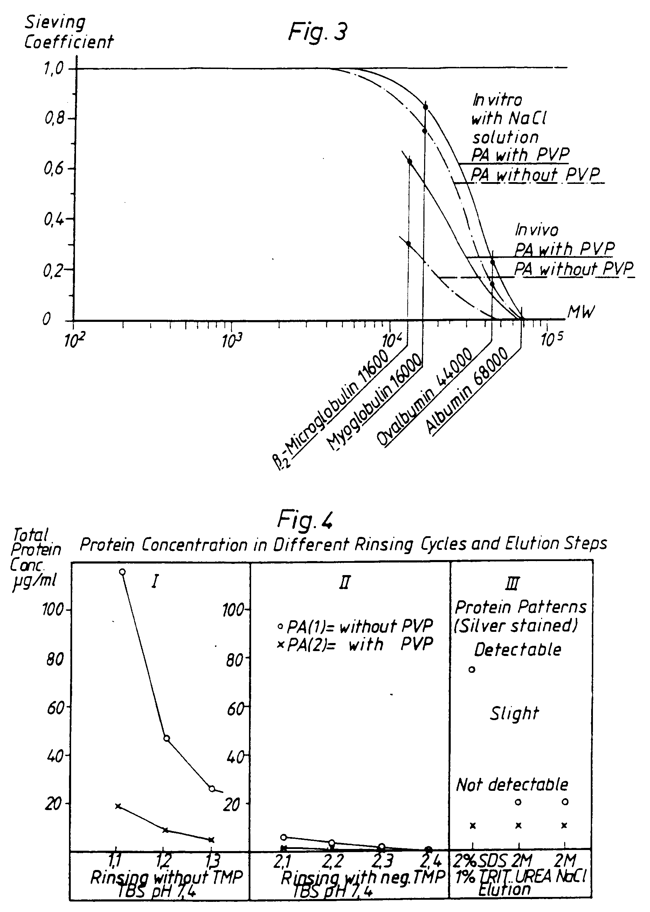

The above mentioned sieving characteristics (see fig 3) are achieved because the membrane according to the present invention has a very narrow pore size distribution on the inner membrane skin. In contrary to the membrane according to EP-A-0 168 783 the inner skin membrane layer according to the present invention (which is responsible for the sieving properties) is very thin. The thinner the layer is, the more homogeneous pore sizes can be achieved.

Another advantage of the membrane according to the present invention is that the difference between the sieving coefficients, measured in water (in vitro) and in plasma or whole blood (in vivo), respectively, is small (see fig 3). Fig 3 shows also for comparison the sieving coefficient of a membrane made from the same hydrophobic PA-material but without the addition of the hydrophilic polymer. In that membrane a big difference between 'in vitro' and 'in vivo' sieving is observed.

The reason for the negligible difference of the hydrophilic version is a lower protein adsorption to the membrane.

The reduced adsorption of proteins decreases the risk for changing the membrane pore sizes. The adsorption was investigated by a method which is described in the Ritz et al reference mentioned at the end of the present description. Fig 4 presents the results of the adsorption measurements on both types of membranes and shows clearly that much higher amounts of protein can be rinsed back and eluted from the more hydrophobic membrane.

From this result it can be concluded that in the hydrophilic version less proteins are adsorbed on the membrane and in the membrane pores. The effect of this provides a small or no change of the membrane effective pore size and the sieving properties.

As regards fig 4 it may be added for explanation that TBS stands for trisbuffered solution and that part III of this figure shows the qualitative results of the elution of the membrane with three different elution fluids 1 SDS/Triton-solution (sodiumdodecylsulfate), 2 urea solution, 3 natrium-chloride solution. These elution fluids were used after the rinsing procedures shown in part I and II, respectively, to eluate the residual proteins. The SDS/Triton solves hydrophobic/hydrophilic binding sites, urea solves the hydrogen binding sites and NaCl the ionic sites. No proteins could be detected in the solution fluids of the hydrophilic variation (PA/PVP).

REJECTION OF BACTERIOLOGICAL MATERIAL

If the membrane is to be used in hemodialysis mode the membrane should reject bacteriological material. It has, however, been found in some clinical studies that e g endotoxins may pass the cellulosic membranes normally used for dialysis and cause fever reactions.

With the membrane of the present invention this risk is reduced by its very high rejection capability of bacteriological material. Endotoxins (from E-coli) are rejected by the membrane with a logarithmic reduction of 3,5-4,5. The reason for this very good rejection for endotoxins and other bacteriological material is that the pore sizes of the inner skin layer is within a very close range and that the maximum pore size does not exceed 80 $\overset{\circ}{A} \simeq 0{,}008 \, \mu$.

Definition of the logarithmic reduction value (LRV)

$$\text{e.g. LRV}=\log_{10} \left[ \frac{\text{number of organisms in challenge suspension}}{\text{number of organisms in filtrate}} \right]$$

LRV = 3 means: 999 out of 1000 endotoxins are eliminated.

The reduction value for bacteria pseudomonas diminuta stam ATCC 19146 was measured with LRV > $10^7$. These bacteria are larger in size, and therefore they are rejected to a higher degree.

BIOCOMPATIBILITY

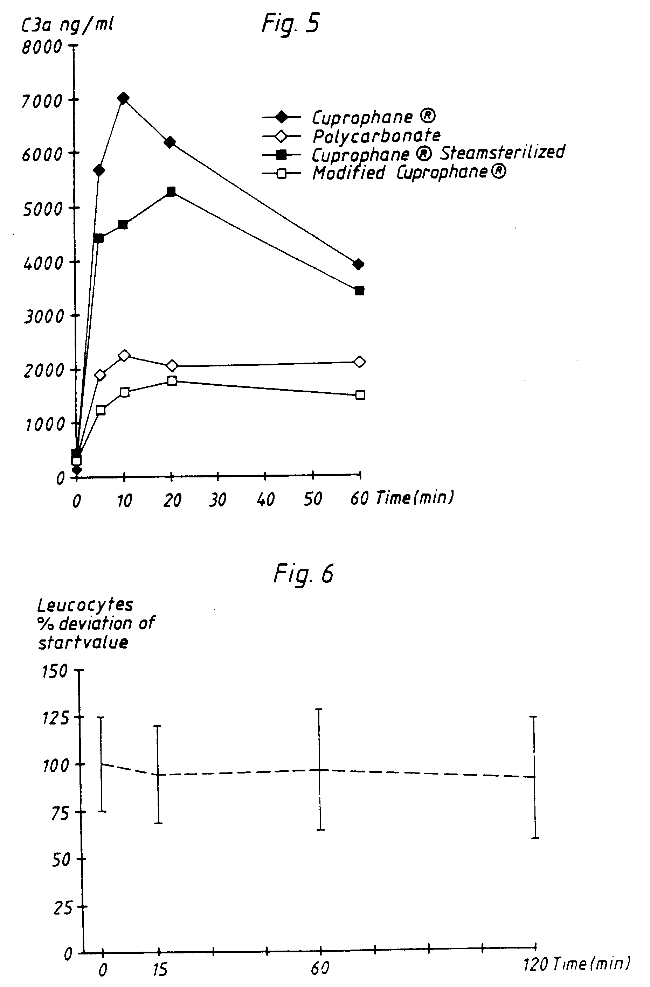

It is reported that, for example, cellulosic membranes like Cuprophan or saponified cellulose might activate the complement system. This activation can be measured by an increase of the complement factors $C_{3a}$, $C_{3d}$, $C_{5a}$, mainly $C_{3a}$, during the first 15-20 minutes of the dialysis treatment. Whereas Cuprophan shows an increase of the $C_{3a}$ factor concentration in the patients blood from 10 to 7000 ng ml (fig 5), there was no increase measured for the membrane according to the present invention when it was made according to the above examples.

Another parameter is the change of leucocyte cells in the blood during the dialysis treatment. Once again, by using Cuprophane membrane, the number of leucocytes in the patients blood drops within the first 15-20 minutes to about 20% of the initial value. Only a small drop to about 90% of the initial value is seen with the membrane made in accordance with the above examples (fig 6).

Presently the $C_{3a}$ factor concentration and the leucocyte changes are used as parameters to characterize biocompatibility. Low changes in these two parameters indicate a good biocompatibility.

REFERENCES

E Ritz, K Andrassy, J Bommer, E Rauterberg:
Protein Layer Formation on artificial membranes; (C Tegernsee-symposium, March 1986)
Contribution to Nephrology No 50, Karger, Basel
NIH Report 77-1294
Evaluation of hemodialyzers and dialysis membranes
EP-A-0 168 783
EP-B-0 082 433
WO 86/00028

**Claims**

1. A permselective asymmetric hollow fiber membrane being suitable for, for example, hemodialysis, comprised of a hydrophobic first polymer, a hydrophilic second polymer and suitable additives, being chosen from the group of non-solvents or weak solvents for the hydrophobic polymer, **characterized by** a three-layer structure, comprising a first inner layer in the form of a dense rather thin skin, having a thickness less than 1 μm and a maximum pore size of about 8 nm, responsible for the sieving properties, a second layer in the form of a sponge structure, having a high diffusive permeability and a thickness of about 1 to 15 μm and serving as a support for said first layer, and a third layer in the form of a finger structure, giving the membrane a mechanical stability and having a thickness of about 20 to 60 μm, the membrane being manufactured by presolving the hydrophobic first polymer in a solvent, presolving the hydrophilic second polymer in a solvent of preferably the same kind, mixing the two solutions, extruding the mixture through the outer ring slit of a nozzle with two concentric openings, a precipitating liquid including a part of the hydrophilic second polymer flowing through the inner openings, to obtain a coagulated membrane, which is subsequently washed and peferably dried.

2. A membrane according to claim 1, **characterized in** that it consists of 85 - 95 wt.% of said hydrophobic first polymer, 0.5 -7.5 wt.% of said hydrophilic second polymer and 0.5 - 7.5 wt.% of suitable additives.

3. A membrane according to claim 1 or 2, **characterized in** that said hydrophobic first polymer is chosen from the group polyarylsulfone, polycarbonate, polyamide, polyvinylchloride, modified acrylic acid, polyether, polyurethane, polyacrylnitrile, polypropylene, polyetherimide and copolymers of said polymers, preferably polyamide.

4. A membrane according to any of the claims 1 to 3, **characterized in** that said hydrophilic second polymer is chosen from the group polyvinylpyrrolidone, polyglycolmonoester, water soluble cellulosic derivatives, polysorbate, and polyethylene-polypropylene oxide copolymers, preferably polyvinylpyrrolidone.

5. A membrane according to any of the claims 1 to 4, **characterized in** that it has a high sieving coefficient for beta-2-microglobulin with MW of 12 500 in blood of at least 0,6, and a high rejection rate for albumin with MW of 68 000 above 99 % (s < 0,01).

6. A membrane according to any of the claims 1 to 5, **characterized in** that the second layer has a thickness in the magnitude of about 3 - 5 μm.

7. A membrane according to any of the claims 1 to 6, **characterized in** that the third layer has a thickness in the magnitude of about 40 μm.

8. A membrane according to any of the claims 1 to 7, **characterized in** that it has a logarithmic reduction value of at least 3 for the rejection of endotoxins.

9. A membrane according to any of the claims 1 to 8, **characterized by** a ultrafiltration permeability for water in the magnitude of $500 \cdot 10^{-12}$ m$^3$/m$^2 \cdot$ s $\cdot$ Pa (250 ml/h $\cdot$ mm Hg $\cdot$ m$^2$).

10. A membrane according to any of the claims 1 to 9, **characterized by** a diffusive permeability of $110 - 150 \times 10^{-5}$ cm/s.

11. A process for manufacturing a permselective asymmetric hollow fiber membrane by mixing a hydrophobic first polymer with a hydrophilic second polymer and suitable additives and solvents, the additives being chosen from the group of non-solvents or weak solvents for the hydrophobic polymer , **characterized in** that the hydrophobic first polymer is presolved in a solvent, as the hydrophilic second polymer is presolved in a solvent of preferably the same kind whereby the second polymer is chosen from the group comprising polyvinylpyrrolidone, polyglycolmonoester, water soluble cellulosic derivative, polysorbate, and polyethylene-polypropylene oxide copolymer, preferably polyvinylpyrrolidone and in that the two solutions are mixed, whereafter the mixture is extruded through the outer ring slit of a nozzle with two concentric openings, a precipitating liquid including a part of the hydrophilic second polymer flowing through the inner opening, to obtain a coagulated membrane, which is subsequently washed and preferably dried.

12. A process according to claim 11, **characterized in** that the mixing is made under an elevated temperature, preferably about 60 °C and in that the extrusion thereafter is made at a lower temperature, preferably below 21 °C.

**13.** A process according to claim 11 or 12, **characterized in** that the mixing is made under high shear forces.

**14.** A process according to claim 11 or 12, **characterized in** that the mixing is made in combination with an ultrasonic treatment.

**15.** A process according to any of the claims 11 to 14, **characterized in** that said solvent is chosen from the group dimethylacetamide dimethylformamide, dimethylsulfoxide, n-methylpyrrolidon and mixtures of said solvents, preferably dimethylsulfoxide.

**16.** A process according to any of the claims 11 to 15, **characterized in** that said precipitating liquid includes a solvent for the hydrophilic second polymer, preferably water.

**17.** A process according to claim 16, **characterized in** that said precipitating liquid includes a solvent for the hydrophobic first polymer, preferably DMSO.

**18.** A process according to claim 17, the first polymer being polyamid and the second polymer being PVP, **characterized in** that the precipitation liquid includes about 70 % water and 30 % DMSO.

**19.** A process according to any of the claims 11 to 18, **characterized in** that a jet of precipitation liquid is extruded within the center of the hollow fiber simultaneously with the mixture of the two polymers.

**20.** A process according to any of claims 11 to 19, **characterized in** that the precipitation is followed by water rinsing, glycerolization and drying.

**21.** A process according to any of the claims 11 to 20, **characterized in** that the extrusion solution consists of 78 - 88 wt.% solvent, 10 - 15 wt.% hydrophobic polymer, 0.5 - 5 wt.% hydrophilic and 0.5 - 5 wt.% additives.

## Patentansprüche

**1.** Permselektive asymmetrische Hohlfasermembran, geeignet beispielsweise für Hämodialyse, mit einem hydrophoben ersten Polymer, einem hydrophilen zweiten Polymer und geeigneten Zusatzstoffen, die aus der Gruppe von Nichtlösemitteln oder schwachen Lösemitteln für das hydrophobe Polymer ausgewählt sind, **gekennzeichnet durch** eine dreischichtige Struktur mit einer ersten inneren Schicht in der Form einer dichten, ziemlich dünnen Haut mit einer Dicke von weniger als 1 μm und einer maximalen Porengröße von etwa 8 nm, die für die Siebeigenschaften verantwortlich ist, einer zweiten Schicht in der Form einer Schwammstruktur mit einer hohen Diffusionspermeabilität und einer Dicke von etwa 1 bis 15 μm, die als Träger für die erste Schicht dient, und einer dritten Schicht in der Form einer Fingerstruktur, die der Membran eine mechanische Stabilität verleiht und eine Dicke von etwa 20 bis 60 μm hat, wobei die Membran durch Vorlösen des hydrophoben ersten Polymers in einem Lösemittel, Vorlösen des hydrophilen zweiten Polymers in einem Lösemittel von vorzugsweise der gleichen Art, Vermischen der beiden Lösungen, Extrudieren des Gemisches durch den äußeren Ringschlitz einer Düse mit zwei konzentrischen Öffnungen, wobei eine einen Teil des hydrophilen zweiten Polymers einschließende Ausfällflüssigkeit durch die innere Öffnung fließt, um eine koagulierte Membran zu erhalten, welche anschließend gewaschen und vorzugsweise getrocknet wird, hergestellt ist.

**2.** Membran nach Anspruch 1, **dadurch gekennzeichnet**, daß sie aus 85 bis 95 Gew.-% des hydrophoben ersten Polymers, 0,5 bis 7,5 Gew.-% des hydrophilen zweiten Polymers und 0,5 bis 7,5 Gew.-% geeigneten Zusatzstoffen besteht.

**3.** Membran nach Anspruch 1 oder 2, **dadurch gekennzeichnet**, das das hydrophobe erste Polymer aus der Gruppe Polyarylsulfon, Polycarbonat, Polyamid, Polyvinylchlorid, modifizierter Acrylsäure, Polyether, Polyurethan, Polyacrylnitril, Polypropylen, Polyetherimid und Copolymeren dieser Polymere, vorzugsweise Polyamid, ausgewählt ist.

**4.** Membran nach einem der Ansprüche 1 bis 3, **dadurch gekennzeichnet**, das das hydrophile zweite Polymer aus der Gruppe Polyvinylpyrrolidon, Polyglycolmonoester, wasserlöslichen Cellulosederivaten, Polysorbat und Polyethylen-Polypropylenoxidcopolymeren, vorzugsweise Polyvinylpyrrolidon, ausgewählt ist.

**5.** Membran nach einem der Ansprüche 1 bis 4, **dadurch gekennzeichnet**, daß sie einen hohen Siebkoeffizienten für $\beta_2$-Mikroglobulin mit einem Molekulargewicht von 12 500 in Blut von wenigstens 0,6 und einen hohe Abweisrate für Albumin mit einem Molekulargewicht von 68 000 oberhalb 99 % (s < 0,01) hat.

6. Membran nach einem der Ansprüche 1 bis 5, **dadurch gekennzeichnet**, daß die zweite Schicht eine Dicke in der Größenordnung von etwa 3 bis 5 $\mu$m hat.

7. Membran nach einem der Ansprüche 1 bis 6, **dadurch gekennzeichnet**, daß die dritte Schicht eine Dicke in der Größenordnung von ewa 40 $\mu$m hat.

8. Membran nach einem der Ansprüche 1 bis 7, **dadurch gekennzeichnet**, daß sie einen logarithmischen Reduktionswert von wenigstens 3 für die Endotoxinabweisung hat.

9. Membhran nach einem der Ansprüche 1 bis 8, **gekennzeichnet durch** eine Ultrafiltrationspermeabilität für Wasser in der Größenordnung von $500 \times 10^{-12}$ m$^3$/m$^2$ . s . Pa (250 ml/h . mm Hg . m$^2$).

10. Membran nach einem der Ansprüche 1 bis 9, **gekennzeichnet durch** eine Diffusionspermeabilität von 110 bis 150 $\times 10^{-5}$ cm/s.

11. Verfahren zur Herstellung einer permselektiven asymmetrischen Hohlfasermembran durch Vermischen eines hydrophoben ersten Polymers mit einem hydrophilen zweiten Polymer und geeigneten Zusatzstoffen und Lösemitteln, wobei die Zusatzstoffe aus der Gruppe von Nichtlösemitteln oder schwachen Lösemitteln für das hydrophobe Polymer ausgewählt werden, **dadurch gekennzeichnet**, daß das hydrophobe erste Polymer in einem Lösemittel vorgelöst wird, das hydrophile zweite Polymer vorzugsweise der gleichen Art vorgelöst wird, wobei das zweite Polymer aus der Gruppe Polyvinylpyrrolidon, Polyglycolmonoester, wasserlösliches Cellulosederivat, Polysorbat und Polyethylen-Polypropylenoxidcopolymeren, vorzugsweise Polyvinylpyrrolidoin, ausgewählt wird, und daß die beiden Lösungen vermischt werden, wonach das Gemisch durch den äußeren Ringschlitz einer Düse mit zwei konzentrischen Öffnungen extrudiert wird, wobei eine einen Teil des hydrophilen zweiten Polymers enthaltende Ausfällflüssigkeit durch die innere Öffnung fließt, um eine koagulierte Membran zu erhalten, die anschließend gewaschen und vorzugsweise getrocknet wird.

12. Verfahren nach Anspruch 11, **dadurch gekennzeichnet**, daß das Mischen bei einer erhöhten Temperatur, vorzugsweise etwa 60 °C, erfolgt und daß das Extrudieren danach bei einer niedrigeren Temperatur, vorzugsweise unter 21 °C, durchgeführt wird.

13. Verfahren nach Anspruch 11 oder 12, **dadurch gekennzeichnet**, daß das Mischen unter hohen Scherkräften erfolgt.

14. Verfahren nach Anspruch 11 oder 12, **dadurch gekennzeichnet**, daß das Mischen in Kombination mit einer Ultraschallbehandlung erfolgt.

15. Verfahren nach einem der Ansprüche 1 bis 4, **dadurch gekennzeichnet**, daß das Lösemittel aus der Gruppe Dimethylacetamid, Dimethylformamid, Dimethylsulfoxid, n-Methylpyrrolidon und Gemischen dieser Lösungsmittel, vorzugsweise Dimethylsulfoxid, ausgewählt wird.

16. Verfahren nach einem der Ansprüche 11 bis 15, **dadurch gekennzeichnet**, daß die Ausfällflüssigkeit ein Lösemittel für das hydrophile zweite Polymer, vorzugsweise Wasser, einschließt.

17. Verfahren nach Anspruch 16, **dadurch gekennzeichnet**, daß die Ausfällflüssigkeit ein Lösemittel für das hydrophobe erste Polymer, vorzugsweise DMSO, einschließt.

18. Verfahren nach Anspruch 17, wobei das erste Polymer Polyamid und das zweite Polymer PVP ist, **dadurch gekennzeichnet**, daß die Ausfällflüssigkeit etwa 7 % Wasser und 30 % DMSO einschließt.

19. Verfahren nach einem der Ansprüche 11 bis 18, **dadurch gekennzeichnet**, daß ein Düsenstrahl von Ausfällflüssigkeit in der Mitte der Hohlfaser gleichzeitig mit dem Gemisch der beiden Polymeren extrudiert wird.

20. Verfahren nach einem der Ansprüche 11 bis 19, **dadurch gekennzeichnet**, daß auf die Ausfällung ein Spülen mit Wasser, eine Glycerinbehandlung und ein Trocknen folgen.

21. Verfahren nach einem der Ansprüche 11 bis 20, **dadurch gekennzeichnet**, daß die Extrudierlösung aus 78 bis 88 Gew.-% Lösemittel, 10 bis 15 Gew.-% hydrophobem Polymer, 0,5 bis 5 Gew.-% hydrophilem Polymer und 0,5 bis 5 Gew.-% Zusatzstoffen besteht.

**Revendications**

1. Membrane asymétrique permsélective en fibre creuse appropriée, par exemple, pour une hémodialyse, formée d'un premier polymère hydrophobe, d'un deuxième polymère hydrophile et d'additifs appropriés, lesdits additifs étant choisis dans le groupe des non-solvants ou des solvants faibles pour le polymère hydrophobe, caractérisée par une structure à trois couches, comprenant une première couche sous la forme d'une peau dense et assez mince, d'une épaisseur de moins de 1 μm et d'une dimension maximale de pores d'environ 8 nm, responsable des propriétés de tamisage, une deuxième couche sous la forme d' une structure spongieuse, ayant une grande perméabilité diffusive et une épaisseur d'environ 1 à 15 μm et servant de support pour ladite première couche, et une troisième couche sous la forme d'une structure en doigt, qui confere une stabilité mécanique à la membrane et ayant une épaisseur d'environ 20 à 60 μm, la membrane étant fabriquée en prédissolvant le premier polymère hydrophobe dans un solvant, en prédissolvant le deuxième polymère hydrophile dans un solvant, qui est de préférence du même type que le premier, en mélangeant les deux solutions, en extrudant le mélange à travers la fente annulaire extérieure d'une buse comportant deux ouvertures concentriques, un liquide de précipitation comprenant une partie du deuxième polymère hydrophile s'écoulant à travers les ouvertures intérieures, pour obtenir une membrane coagulée, qu'on lave ensuite et qu'on sèche de préférence.

2. Membrane selon la revendication 1, caractérisée en ce qu'elle est formée de 85-95 % en poids dudit premier polymère hydrophobe, 0,5-7,5 % en poids dudit deuxième polymère hydrophile et 0,5-7,5 % en poids d'additifs appropriés.

3. Membrane selon la revendication 1 ou 2, caractérisée en ce que ledit premier polymère hydrophobe est choisi dans le groupe formé de polyarylsulfone, polycarbonate, polyamide, chlorure de polyvinyle, acide acrylique modifié, polyéther, polyuréthanne, polyacrylonitrile, polypropylène, polyétherimide et des copolymères desdits polymères, de préférence un polyamide.

4. Membrane selon une quelconque des revendications 1 à 3, caractérisée en ce que ledit deuxième polymère hydrophile est choisi dans le groupe formé de polyvinylpyrrolidone, monoester de polyglycol, dérivés cellulosiques solubles dans l'eau, polysorbate et copolymères de polyéthylène-oxyde de polypropylène, de préférence la polyvinylpyrrolidone.

5. Membrane selon une quelconque des revendications 1 à 4, caractérisée en ce qu'elle a un coefficient de tamisage élevé pour la bêta-2-microglobuline ayant un poids moléculaire de 12 500 (dans le sang), d'au moins 0,6, et un taux de rejet élevé pour l'albumine avec un poids moléculaire de 68 000, supérieure à 99 % (s < 0,01).

6. Membrane selon une quelconque des revendications 1 à 5, caractérisée en ce que la deuxième couche a une épaisseur de l'ordre de 3-5 μm.

7. Membrane selon une quelconque des revendications 1 à 6, caractérisée en ce que la troisième couche a une épaisseur de l'ordre de environ 40 μm.

8. Membrane selon une quelconque des revendications 1 à 7, caractérisée en ce qu'elle a une valeur de réduction logarithmique de rejet des endotoxines d'au moins 3.

9. Membrane selon une quelconque des revendications 1 à 8, caractérisée par une perméabilité d'ultrafiltration pour l'eau de l'ordre de $500.10^{-12} m^3/m^2.s.Pa$ (250 ml/h.mmHg.$m^2$).

10. Membrane selon une quelconque des revendications 1 à 9, caractérisée par une perméabilité diffusive de 110-$150.10^{-5}$cm/s.

11. Procédé de fabrication d'une membrane asymétrique permsélective en libre creuse en mélangeant un premier polymère hydrophobe et un deuxième polymère hydrophile et des additifs et solvants appropriés, lesdits additifs étant choisis dans le groupe des non-solvants ou des solvants faibles pour le polymère hydrophobe, caractérisé en ce que le premier polymère hydrophobe est dissous préalablement dans un solvant, le deuxième polymère hydrophile est dissous préalablement dans un solvant, qui est de préférence du même type que le premier, le second polymère étant choisi dans le groupe formé de polyvinylpyrrolidone, monoester de polyglycol, dérivés cellulosiques solubles dans l'eau, polysorbate et copolymères de polyéthylène-oxyde de polypropylène, de préférence la polyvinylpyrrolidone, et en ce qu'on mélange les deux solutions, après quoi on extrude le mélange à travers la fente annulaire extérieure d'une buse comportant deux ouvertures concentriques, un liquide de précipitation comprenant une partie du deuxième polymère hydrophile s'écoulant à travers les ouvertures intérieures, pour obtenir une membrane coagulée, qu'on lave ensuite et qu'on sèche de préférence.

12. Procédé selon la revendication 11, caractérisé en ce qu'on effectue le mélange à une température élevée, de préférence environ 60°C, et en ce qu'on effectue ensuite l'extrusion à une température plus basse, de préférence au-dessous de 21°C.

13. Procédé selon la revendication 11 ou 12, caractérisé en ce qu'on effectue le mélange en appliquant des forces de cisaillement élevés.

14. Procédé selon la revendication 11 ou 12, caractérisé en ce qu'on effectue le mélange conjointement avec un traitement par ultrasons.

15. Procédé selon une quelconque des revendications 11 à 14, caractérisé en ce qu'on choisit ledit solvant dans le groupe comprenant le diméthylacétamide, le diméthylformamide, le diméthylsulfoxyde, la n-méthylpyrrolidone, et des mélanges desdits solvants, de préférence le diméthylsulfoxyde.

16. Procédé selon une quelconque des revendications 11 à 15, caractérisé en ce que ledit liquide de précipitation comprend un solvant pour le deuxième polymère hydrophile, de préférence de l'eau.

17. Procédé selon la revendication 16, caractérisé en ce que ledit liquide de précipitation comprend un solvant pour le premier polymère hydrophobe, de préférence DMSO.

18. Procédé selon la revendication 17, le premier polymère étant un polyamide et le deuxième polymère étant la PVP, caractérisé en ce que le liquide de précipitation comprend environ 70 % en poids d'eau et 30% en poids de DMSO.

19. Procédé selon une quelconque des revendications 11 à 18, caractérisé en ce qu'un jet de liquide de précipitation est extrudé dans le milieu de la fibre creuse en même temps que le mélange des deux polymères.

20. Procédé selon une quelconque des revendications 11 à 19, caractérisé en ce que la précipitation est suivie d'un rinçage à l'eau, d'une glycérolisation et d'un séchage.

21. Procédé selon une quelconque des revendications 11 à 20, caractérisé en ce que la solution d'extrusion est formée de 78-88 % en poids de solvant, 10-15 % en poids de polymère hydrophobe, 0,5-5 % en poids de polymère hydrophile et 0,5-5 % en poids d'additifs.

## Fig. 1a

## Fig. 1b

*Fig. 2a*

*Fig.2b*

Fig. 3

Sieving Coefficient

In vitro
with NaCl
solution
PA with PVP
PA without PVP

In vivo
PA with PVP
PA without PVP

MW

β₂-Microglobulin 11600
Myoglobulin 16000
Ovalbumin 44000
Albumin 68000

Fig. 4

Protein Concentration in Different Rinsing Cycles and Elution Steps

Total Protein Conc. µg/ml

I

II
○ PA(1)= without PVP
× PA(2)= with PVP

III
Protein Patterns
(Silver stained)
Detectable
○

Slight

Not detectable
○        ○
×    ×    ×

1,1  1,2  1,3
Rinsing without TMP
TBS pH 7,4

2,1  2,2  2,3  2,4
Rinsing with neg. TMP
TBS pH 7,4

2% SDS  2M   2M
1% TRIT. UREA NaCl
Elution

Fig. 5

Fig. 6

## Fig. 7

**Ultrafiltration - Rate**

UF (ml/min)

$A = 1,3 \, m^2$
Membrane: PA/PVP

$Q_B = 400$
$n = 20$

$Q_B = 300$
$n = 90$

$Q_B = 200$
$n = 20$

In vitro test with whole blood: Hct = 25 %
Pct = 6,5 g/dl

TMP (mmHg)

## Fig. 8

$C_{UREA}$ (ml/min)

**Urea - Clearance versus Bloodflow at Different Ultrafiltration - Rates**

$A = 1,3 \, m^2$
Membrane: PA/PVP

$n = 15$

In vitro test with whole blood: Hct = 25 %
Pct = 6,5 g/dl

$Q_D = 500 \, ml/min$

UF = 0

$Q_B$ (ml/min)

16